# EUROPÄISCHE PATENTSCHRIFT

(11) **EP 2 223 846 B1**
(45) Veröffentlichungstag und Bekanntmachung des Hinweises auf die Patenterteilung: **08.02.2012**
(21) Anmeldenummer: 10450018.6
(22) Anmeldetag: 12.02.2010
(51) Int. Cl.: B62D 63/06, B62B 3/06, B66F 9/06, B62D 13/04

(54) **Transportwagen**
Conveyor trolley
Chariot de transport

(30) Priorität: 12.02.2009 AT 732009
(43) Veröffentlichungstag der Anmeldung: 01.09.2010
(73) Patentinhaber: GESA Transporttechnik Ing. Gerhard Sandhofer Gesellschaft m.b.H., 9020 Klagenfurt (AT)
(72) Erfinder: Raunig, Thomas, A-9020 Klagenfurt (AT)
(74) Vertreter: Beer, Manfred

(56) Entgegenhaltungen:
- EP-A2- 1 972 521
- DE-A1-102004 009 884
- FR-A1- 2 850 096
- FR-A5- 2 217 950
- GB-A- 1 351 565

## Beschreibung

Die Erfindung betrifft einen Transportwagen mit den Merkmalen des einleitenden Teils von Anspruch 1 (EP 1 972 521 A).

Häufig stellt sich beim Transport von Waren und ähnlichem, die auf Transportrahmen abgestellt sind, das Problem, diese in einem Verband mit mehreren Transportrahmen (beispielsweise in Form eines Zuges oder Zuggespannes) von einem Ort zu einem anderen zu bewegen.

Aus der EP 1 972 521 A ist ein Transportwagen zum Aufnehmen eines Innenwagens bekannt. Eine besonders robuste und einfach zu beladende Anordnung wird dadurch erreicht, dass ein Fahrgestell vorgesehen ist, welches in einem Seitenbereich offen ist, wobei mindestens ein Aufnahmebereich gebildet ist. Über den offenen Seitenbereich ist ein Innenwagen mit Rädern in den Aufnahmebereich einschiebbar. Weiter ist eine Hubeinrichtung vorgesehen, mit welcher der Innenwagen anhebbar ist.

Die DE 10 2004 009 884 A betrifft ein Transportsystem, bei dem Transporteinrichtungen in Form von Hubwagen, die bei der Aufnahme des auf einer Palette oder in einem Behälter befindlichen Gutes diese fest umschließt, eingesetzt werden. Durch eine Ausbildung des Rahmens des Hubwagens mit einer oder zwei offenen Seiten, ihre Verbindung an einer Seite oder durch ein Portal und die Ablage der Palette oder des Behälters auf Leisten am Rahmen des Hubwagens, kann die Ladung nach dem Abstellen seitlich entnommen werden, ohne dass der Hubwagen abgehängt werden muss. Der Hubwagen besitzt ein mittels der Deichsel lenkbares Vorderrad, das ebenso wie die an der Schwinge angeordneten Hinterräder durch Hubbewegung der Deichsel teilweise angehoben werden kann.

Die FR 2 850 096 A beschreibt einen Transportwagen für Paletten, der einen liegenden, mit Rädern bestückten Rahmen aufweist.

Aus der GB 1 351 565 A ist ein Transportwagen für Paletten oder Behälter bekannt, der mit einer Hubeinrichtung in Form eines U-förmigen Rahmens ausgestattet ist.

Insbesondere ist dabei auch oft das Erfordernis gegeben, dass solche Züge spurgetreu gezogen werden können, was in der Regel nur mit erheblichem Aufwand und besonders ausgestalteten Laufwerken möglich ist.

Der Erfindung liegt die Aufgabe zu Grunde, einen Transportwagen der eingangs genannten Gattung zur Verfügung zu stellen, mit dem Transportrahmen zu Zügen oder Zuggespannen zusammengekuppelt einfach transportiert und verfahren werden können.

Gelöst wird diese Aufgabe erfindungsgemäß mit einem Transportwagen, der die Merkmale von Anspruch 1 aufweist.

Bevorzugte und vorteilhafte Ausgestaltungen der Erfindung sind Gegenstand der Unteransprüche.

Der erfindungsgemäße Transportwagen kann auf einfache Weise mit einem Transportrahmen (auch "Dolly" genannt) zu einem Transportgerät zusammengefügt werden.

In Betracht gezogen ist auch eine Ausführungsform der Erfindung, bei welcher der Tränsportwagen zwei Paare lenkbarer Rollen oder Räder aufweist, wobei die Paare bevorzugt zum simultanen Einschlagen (Lenken) miteinander gekuppelt sein können.

Die Lenkung kann als Achsschenkellenkung ausgebildet sein (Allrad-Achsschenkellenkung).

An dem U-förmigen Rahmen können Hebeeinrichtungen für einen in den Transportwagen eingesetzten (eingeschobenen) Transportrahmen (Dolly) vorgesehen sein.

Um zu verhindern, dass der Transportrahmen beim Verfahren des erfindungsgemäßen Transportwagens, also beim Bewegen des Transportgerätes unbeabsichtigt aus dem Transportwagen herausbewegt wird, sind in einer Ausführungsform der Erfindung Sicherungsklappen vorgesehen.

Die Sicherungsklappen halten in ihrer eingeklappten Stellung den Transportrahmen im Transportwagen.

Bei dem erfindungsgemäßen Transportwagen besteht die Möglichkeit den Transportrahmen als Mitläufer zu verfahren, d.h. er steht auf seinen eigenen Rollen, insbesondere als Lenkrollen ausgebildeten Rollen, und bewegt sich auf diesen, wenn der Zug aus Transportgeräten mit Transportwagen gemäß der Erfindung bewegt wird.

In einer weiteren Ausführungsform der Erfindung kann vorgesehen sein, dass der Transportrahmen, nachdem er in den U-förmigen Rahmen des Transportwagens eingeschoben worden ist, angehoben wird, sodass seine Rollen nicht mehr auf den Boden aufstehen.

Das Anheben des Transportrahmens gegenüber dem Transportwagen kann mit Hilfe einer (mechanischen) Hebevorrichtung erfolgen.

Die in dem erfindungsgemäßen Transportwagen vorgesehene Vorrichtung zum Anheben eines Transportrahmens kann mit einem Betätigungshebel oder mit einem (elektro-)hydraulischem Hebeantrieb (Hydraulikzylinder) ausgestattet sein.

Die Hebeeinrichtung kann auch mit Hilfe von Druckmittel-Zylindern (Hydraulikzylinder) verstellbar (anheb- bzw. absenkbar) sein. Dabei ist es bevorzugt, dass die Pumpe zum Beaufschlagen der Zylinder mit Druckmittel (z.B. Hydrauliköl) am Transportwagen montiert und z.B. mit Hilfe eines mit der Hand oder mit dem Fuß betätigbaren (Schwenk-)Hebels oder mit Hilfe eines Elektromotors (elektrohydraulischer Hebeantrieb) betätigbar ist.

Im Rahmen der Erfindung ist in einer möglichen Ausführungsform vorgesehen, dass die bei einem spurgetreuen Transport an der Seite der Lenkrollen vorgesehene Deichsel hochklappbar ausgebildet ist, wobei eine Sicherung gegen Herunterfallen der Deichsel vorgesehen sein kann.

Wenn die Deichsel auf der Lenkrollenseite des Transportwagens montiert ist und die Fahrt in Richtung der Bockrollen als vordere Rollen erfolgt, wird das Fahrverhalten des Zuggespanns spurgetreu.

In seinen Ausführungsformen kann das Transportgerät mit erfindungsgemäßen Transportwagen folgende Vorteile haben:
Es können einfach und leicht gebaute Transportrahmen verwendet werden, wobei, insbesondere wenn die erfindungsgemäßen Transportwagen des Transportgerätes mit einer Hebeeinrichtung oder einer Rampe ausgebildet sind, einfache, billige Rollen, die nicht einmal Lenkrollen sein müssen, verwendet werden können. Es ist auch nicht mehr erforderlich Gabelstapler zu verwenden, welche Waren von Paletten auf Transportwagen umsetzen, da der erfindungsgemäße Transportrahmen quasi die Funktion der Palette übernimmt und an der Ware bleibt.

Ein weiterer Vorteil besteht darin, dass die Zyklenzeit durch Entfall von An- und Abkuppeln der im Verbund fahrenden Transportwagen reduziert wird.

Durch den Einsatz von billig ausgeführten Transportrahmen (Dollys) können die Anschaffungskosten verringert werden, insbesondere weil nicht jeder Transportrahmen mit einer teuren, spurgetreuen Lenkung bzw. teuren Rollen- oder Radsätzen ausgestattet sein muss.

Schließlich erlaubt die Erfindung den Einsatz von standardisierten Transportwagen, mit welchen unterschiedliche Transportrahmen (Dollys) befördert werden können.

Weitere Einzelheiten und Merkmale der Erfindung ergeben sich aus der nachstehenden Beschreibung eines bevorzugten Ausführungsbeispieles.

Es zeigt:
Fig. 1 in Seitenansicht eine Ausführungsform eines Transportwagens,
Fig. 2 in Draufsicht eine Einzelheit des Transportwagens aus Fig. 1 und
Fig. 3 den Transportwagen aus Fig. 1 in Draufsicht.

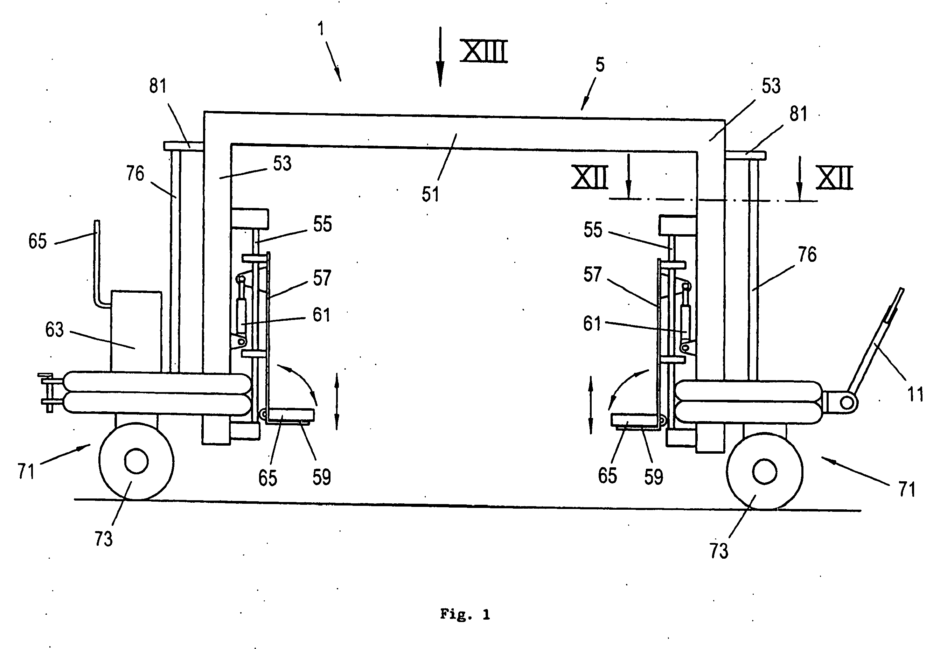

Nachstehend wird die in den Fig. 1 bis 3 teilweise schematisiert dargestellte Ausführungsform eines erfindungsgemäßen Transportwagens beschrieben.

Bei diesem Transportwagen ist der Rahmen 5 in Gebrauchslage so ausgerichtet, dass der Steg 51 des Rahmens 5 oben, die Schenkel 53 lotrecht und die offene Seite des Rahmens 5 unten angeordnet ist.

An beiden Schenkeln des Rahmens 5 sind als Hebeeinrichtung auf Führungen 55 geführte Hebewinkel 57 angeordnet. Jeder Hebewinkel 57 besitzt einen lotrechten Teil der an der Führung 55 geführt ist und einen im Wesentlichen horizontalen Schenkel 59 als Auflage für einen anzuhebenden Transportrahmen.

Zum Anheben der Hebeeinrichtungen (Hebewinkel 57) sind Hydraulikzylinder 61 vorgesehen, die mit Hilfe eines gemeinsamen Antriebes 63 mit Hydraulikmedium beaufschlagbar sind. Im Einzelnen kann der Antrieb 63 mit einer gemeinsame Hydraulikpumpe (mit einem Pumphebel 65 oder mit einem Elektromotor betätigbar) verbunden sein, um sicherzustellen, dass beide Hebelwinkel 57 gleichzeitig und gleichmäßig angehoben werden.

Den horizontalen Schenkeln 59 der Hebewinkel 57 sind an beiden Seiten Sicherungsklappen 65 zugeordnet, die auf der Seite nach oben verschwenkt sind, von der ein Transportrahmen 3 in den Transportwagen 1 eingeschoben werden soll. Die Sicherungsklappen 65 können mit (nicht gezeigten) Betätigungshebeln, die auf der den Sicherungsklappen 65 gegenüberliegenden Seite der Schwenkachse abstehen, versehen sein, die das Schwenken der Sicherungsklappen 65 mit dem Fuß erlauben. Dabei werden die Sicherungsklappen 65 heruntergeklappt nachdem ein Transportrahmen 3 eingeschoben worden ist und angehoben wird.

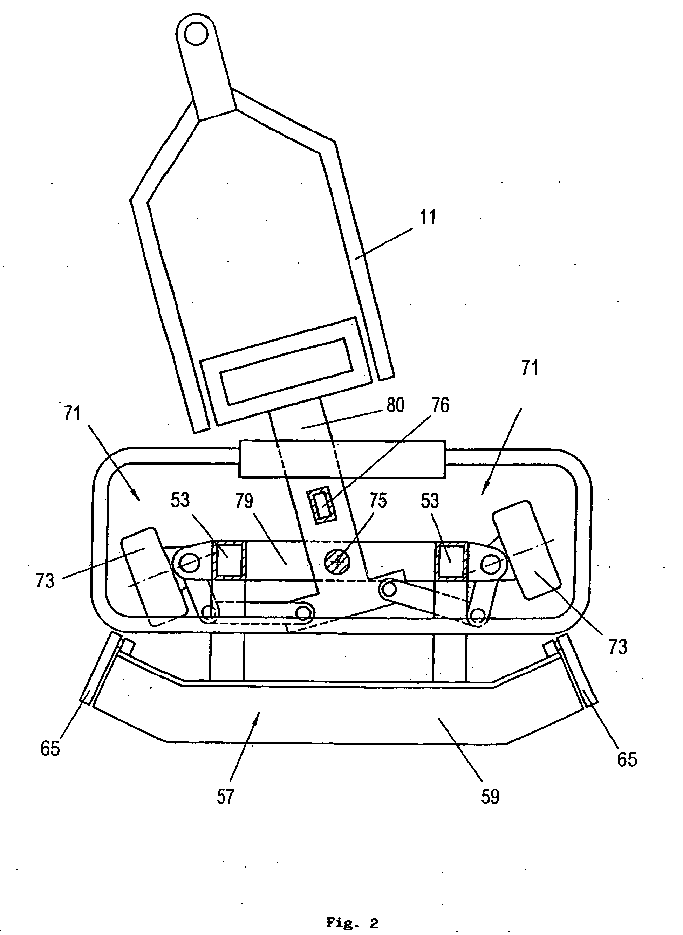

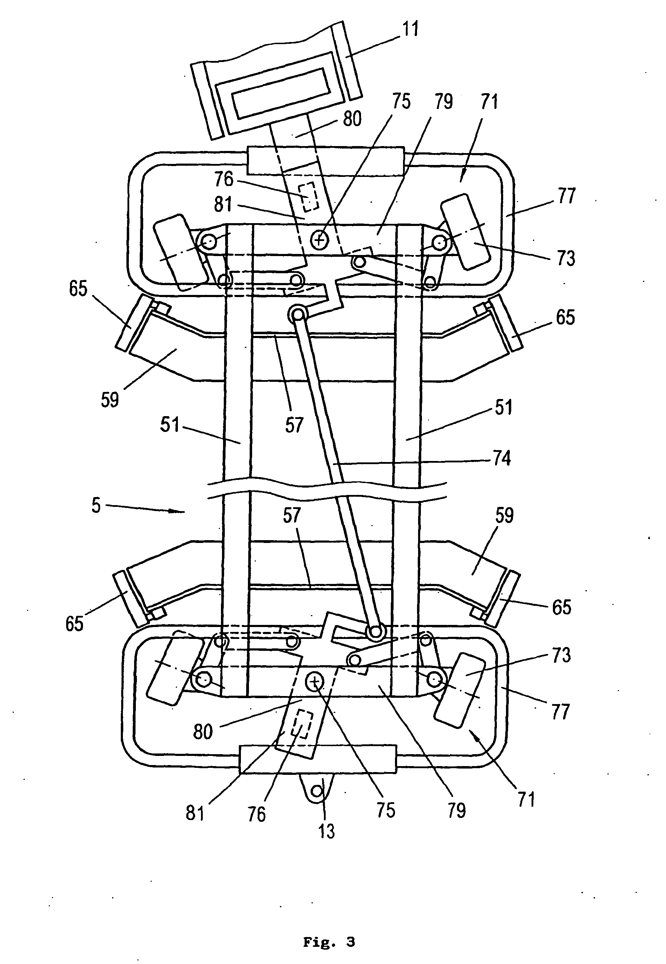

Bei der in den Fig. 1 bis 3 gezeigten Ausführungsform sind an beiden Schenkeln 59 des Rahmens 5 Fahrgestelle 71 mit je zwei lenkbaren Rollen 73 vorgesehen. Die Rollen 73 sind, wie die Fig. 2 und 3 zeigen, über Achsschenkellenkungen schwenkbar, wobei an einem Fahrgestell 71 eine Deichsel 11 schwenkbar angeordnet ist. Um die beiden Lenkungen für die Rollen 73 miteinander zu kuppeln, ist eine Kupplungsstange 74 (Fig. 3) vorgesehen, so dass ein spurgetreues Verfahren von Zuggespannen mit mehreren Transportwagen 1 der Fig. 1 bis 3 und in diesen aufgenommenen und abgehobenen Transportrahmen 3 möglich ist.

Die Achsschenkellenkungen jedes Fahrgestells 71 weisen je eine Lenkstange 80 auf, die um eine rahmenfeste, unten am Träger 79 des Fahrgestells 71 und oben am Rahmen befestigte Achse 75 schwenkbar ist. Die Lenkstangen 80 der Fahrgestelle 71 sind über Verbindungsstangen 76 und im Bereich des Steges des Rahmens angeordnete, um die Achse 75 schwenkbare Hebel 81 sowie eine Kupplungsstange 74 miteinander gekuppelt.

So ist durch die Kupplungsstange 75, welche die Lenkungen beider Fahrgestelle 71 kuppelt, ein spurgetreues Fahren des Transportwagens der Fig. 1 bis 3 gewährleistet.

Um Transportwagen 1 der Ausführungsform von Fig. 1 bis 3 miteinander kuppeln zu können, sind an einem Ende die Deichseln 11 vorgesehen, die über die Lenkstangen 80 mit der Achsschenkellenkung gekuppelt sind, wogegen am anderen Ende eine Kupplung 13 vorgesehen ist, die an einem rahmenförmigen Schutz 77 (Stoßstange) befestigt ist.

In einer gegenüber den Fig. 2 und 3 abgeänderten Ausführungsform sind die Sicherungsklappen 65 an den Hebewinkeln 59 parallel zum Rahmenschenkel 51 ausgerichtet und stehen über die Stoßstangen 77 seitlich nicht vor.

In der Praxis kann vorgesehen sein, dass die mechanischen Teile des Transportwagens 1, insbesondere die Antriebe für die Hebeeinrichtungen (Hebewinkel 59) karosserieartig verkleidet sind, um sie vor Witterungseinflüssen und dgl. zu schützen.

## Patentansprüche

1. Transportwagen (1) für die Aufnahme von Transportrahmen (3), wobei der Transportwagen (1) einen einseitig offenen, im Wesentlichen U-förmigen Rahmen (5) aufweist, der einen Steg (51) und zwei Schenkel (53) aufweist und an der dem Steg (51) gegenüberliegenden Seite offen ist, wobei in den Rahmen (5) ein Transportrahmen einschiebbar ist, **dadurch gekennzeichnet, dass** die Schenkel (53) des Rahmens (5) im Wesentlichen lotrecht ausgerichtet sind, dass die offene Seite des Rahmens (5) unten angeordnet ist, dass der Steg (51) des Rahmens (5) oberhalb der offenen Seite angeordnet ist, dass den Schenkeln (53) des Rahmens (5) Hebeeinrichtungen in Form von Hebewinkeln (57) zugeordnet sind und dass an den Enden der Schenkel (53) des Rahmens (5) lenkbare Rollen (73) vorgesehen sind.

2. Transportwagen nach Anspruch 1, **dadurch gekennzeichnet, dass** am Rahmen (5) schwenkbare Sicherungsklappen (65) vorgesehen sind, die aus einer Wirkstellung in eine Nicht-Wirkstellung verschwenkbar sind und in ihrer Wirkstellung in die offene Seite des Rahmens (5) ragen.

3. Transportwagen nach Anspruch 1 oder 2, **dadurch gekennzeichnet, dass** die Hebewinkel (57) an den Schenkeln (53) des Rahmens (5) parallel zu der Ausrichtung der Schenkel (53) verschiebbar geführt sind.

4. Transportwagen nach Anspruch 3, **dadurch gekennzeichnet, dass** die Hebewinkel (57) über Hydraulikzylinder (61) betätigbar sind.

5. Transportwagen nach Anspruch 3 oder 4, **dadurch gekennzeichnet, dass** die Sicherungsklappen (65) den horizontalen Schenkeln (59) der Hebewinkel (57) zugeordnet sind.

6. Transportwagen nach Anspruch 2, 4 oder 5, **dadurch gekennzeichnet, dass** an den Sicherungsklappen (65) Betätigungshebel vorgesehen sind.

7. Transportwagen nach Anspruch 6, **dadurch gekennzeichnet, dass** die Betätigungshebel, bezogen auf die Schwenkachse der Sicherungsklappen (65), den Sicherungsklappen (65) gegenüberliegend vorgesehen sind.

8. Transportwagen nach Anspruch 1, **dadurch gekennzeichnet, dass** an jedem Schenkel (59) des Rahmens (5) Fahrgestelle (71) mit je zwei lenkbaren Rollen (73) vorgesehen sind, und dass die Rollen (73) mit einer Achsschenkellenkung versehen sind.

9. Transportwagen nach Anspruch 8, **dadurch gekennzeichnet, dass** die Achsschenkellenkungen beider Paare von Rollen (73) miteinander gekuppelt sind.

10. Transportwagen nach Anspruch 9, **dadurch gekennzeichnet, dass** dier Rollen der Achsschenkellenkung über eine im Bereich des oben angeordneten Steges (51) des Rahmens (5) verlaufende Kupplungsstange (75) miteinander gekuppelt sind.

## Claims

1. Transport cart (1) to receive transport frames (3), wherein the transport cart (1) has a substantially U-shaped frame (5) open on one side, which has a cross-piece (51) and two brackets (53) and is open on the side lying opposite the cross-piece (51), wherein a transport frame is able to be inserted into the frame (5), **characterized in that** the brackets (53) of the frame (5) are aligned substantially perpendicularly, that the open side of the frame (5) is arranged at the bottom, that the cross-piece (51) of the frame (5) is arranged above the open side, that lifting devices in the form of lifting angles (57) are associated with the brackets (53) of the frame (5), and that steerable rollers (73) are provided on the ends of the brackets (53) of the frame (5).

2. Transport cart according to Claim 1, **characterized in that** pivotable security flaps (65) are provided on the frame (5), which are able to be swivelled from an operative position into a non-operative position and in their operative position project into the open side of the frame (5).

3. Transport cart according to Claim 1 or 2, **characterized in that** the lifting angles (57) are guided displaceably on the brackets (53) of the frame (5) parallel to the alignment of the brackets (53).

4. Transport cart according to Claim 3, **characterized in that** the lifting angles (57) are actuatable by means of hydraulic cylinders (61).

5. Transport cart according to Claim 3 or 4, **characterized in that** the security flaps (65) are associated with the horizontal brackets (59) of the lifting angles (57).

6. Transport cart according to Claim 2, 4 or 5, **characterized in that** actuating levers are provided on the security flaps (65).

7. Transport cart according to Claim 6, **characterized in that** the actuating levers, in relation to the swivel axis of the securing flaps (65), are provided lying opposite the security flaps (65).

8. Transport cart according to Claim 1, **characterized in that** on each bracket (59) of the frame (5), chassis frames (71) are each provided with two steerable rollers (73), and that the rollers (73) are provided with an axle pivot steering arrangement.

9. Transport cart according to Claim 8, **characterized in that** the axle pivot steering arrangements of both pairs of rollers (73) are coupled with each other.

10. Transport cart according to Claim 9, **characterized in that** the rollers of the axle pivot steering arrangement are coupled with each other via a coupling rod (75) running in the region of the cross-piece (51), arranged at the top, of the frame (5).

## Revendications

1. Chariot de transport (1) pour le logement de cadres de transport (3), le chariot de transport (1) présentant un cadre (5) ouvert sur un côté, sensiblement en forme de U, qui présente un montant (51) et deux branches (53) et est ouvert sur le côté opposé au montant (51), un cadre de transport pouvant être introduit dans le cadre (5), **caractérisé en ce que** les branches (53) du cadre (5) sont orientées sensiblement verticalement, **en ce que** le côté ouvert du cadre (5) est disposé en bas, **en ce que** le montant (51) du cadre (5) est disposé au-dessus du côté ouvert, **en ce que** des dispositifs de levage sous forme de cornières de levage (57) sont attribués aux branches (53) du cadre (5) et **en ce que** des roulettes (73) dirigeables sont prévues sur les extrémités des branches (53) du cadre (5).

2. Chariot de transport selon la revendication 1, **caractérisé en ce que** des clapets de sécurité (65) pivotants sont prévus sur le cadre (5), lesquels peuvent être basculés d'une position active à une position non active et dépassent dans leur position active sur le côté ouvert du cadre (5).

3. Chariot de transport selon la revendication 1 ou 2, **caractérisé en ce que** les cornières de levage (57) sont guidées sur les branches (53) du cadre (5) de façon à pouvoir coulisser parallèlement à l'orientation des branches (53).

4. Chariot de transport selon la revendication 3, **caractérisé en ce que** les cornières de levage (57) peuvent être actionnées au moyen de vérins hydrauliques (61).

5. Chariot de transport selon la revendication 3 ou 4, **caractérisé en ce que** les clapets de sécurité (65) sont attribués aux branches (59) horizontales des cornières de levage (57).

6. Chariot de transport selon la revendication 2, 4 ou 5, **caractérisé en ce que** des leviers d'actionnement sont prévus sur les clapets de sécurité (65).

7. Chariot de transport selon la revendication 6, **caractérisé en ce que** les leviers d'actionnement sont prévus en face des clapets de sécurité (65) par rapport à l'axe de basculement des clapets de sécurité (65).

8. Chariot de transport selon la revendication 1, **caractérisé en ce que** des trains de roulement (71) comprenant chacun deux roulettes (73) dirigeables sont prévus sur chaque branche (59) du cadre (5) et **en ce que** les roulettes (73) sont dotées d'un guidage de fusée d'essieu.

9. Chariot de transport selon la revendication 8, **caractérisé en ce que** les guidages de fusée d'essieu des deux paires de roulettes (73) sont couplés les uns avec les autres.

10. Chariot de transport selon la revendication 9, **caractérisé en ce que** les roulettes du guidage de fusée d'essieu sont couplées les unes avec les autres au moyen d'une barre d'accouplement (75) agencée dans la zone du montant (51) disposé en haut du cadre (5).
